# EUROPÄISCHE PATENTSCHRIFT

(11) **EP 2 623 765 B1**
(45) Veröffentlichungstag und Bekanntmachung des Hinweises auf die Patenterteilung: **08.04.2015**
(21) Anmeldenummer: 12464002.0
(22) Anmeldetag: 01.02.2012
(51) Int. Cl.: F02M 25/07, F16K 11/085, F16K 11/052, F16K 31/04

(54) **Abgassteuerungseinrichtung für eine Brennkraftmaschine**
Exhaust gas control device for a combustion engine
Dispositif de commande des gaz d'échappement pour un moteur à combustion interne

(43) Veröffentlichungstag der Anmeldung: 07.08.2013
(73) Patentinhaber: Continental Automotive GmbH, 30165 Hannover (DE)
(72) Erfinder: Muresan, Daniel, 307220 Giroc (RO)

(56) Entgegenhaltungen:
- EP-A2- 1 426 604
- EP-A2- 2 236 805
- WO-A2-2008/115773
- DE-A1- 10 222 919
- FR-A1- 2 879 712
- GB-A- 1 434 078
- US-A1- 2010 116 256
- US-A1- 2011 061 625

## Beschreibung

Die Erfindung betrifft eine Abgassteuerungseinrichtung für eine Brennkraftmaschine mit einem Abgasventil zur Steuerung einer Strömung in einem Abgaskanal und mit einem Bypassventil zur Steuerung einer Strömung in einem Bypasskanal, mit einem ansteuerbaren Aktor zum Ansteuern des Abgasventils und des Bypassventils, wobei das Abgasventil und das Bypassventil einen gemeinsamen Ventilkörper und einen gemeinsamen Abgaseinlasskanal aufweisen und ein Gehäuse zur Aufnahme des Ventilkörpers eine Einlassöffnung des gemeinsamen Abgaseinlasskanals, eine Auslassöffnung des Abgaskanals des Abgasventils und eine Auslassöffnung des Bypasskanals des Bypassventils aufweist und wobei der Ventilkörper drehbar in dem Gehäuse angeordnet ist und zwei zur Drehachse geneigte Abgasführungsflächen aufweist, so dass in einer ersten Drehstellung die Einlassöffnung über die eine Abgasführungsfläche mit der einen Auslassöffnung und in der zweiten Drehstellung die Einlassöffnung über die andere Abgasführungsfläche mit der anderen Auslassöffnung verbunden ist.

Solche Abgassteuerungseinrichtungen werden bei heutigen Kraftfahrzeugen häufig eingesetzt und sind aus der Praxis bekannt. Bei der aus der Praxis bekannten Abgassteuerungseinrichtung ist jeweils eine Drosselklappe in dem Bypasskanal und dem Abgaskanal angeordnet. Die im Abgaskanal angeordnete Drosselklappe wird über einen Stellmotor als Aktor angesteuert, während die im Bypasskanal angeordnete Drosselklappe über eine Unterdruckdose verstellt wird. Hierdurch erfordert die Abgassteuerungseinrichtung einen sehr großen baulichen Aufwand.

Die GB 1 434 078 A offenbart ein Ventil zum Aufteilen eines Gasstroms mittels einer schwenkbaren Trennwand. In der einen Drehstellung der Trennwand wird der Gasstrom von einem Einlass zu einem ersten Auslass geführt. In der anderen Drehstellung der Trennwand wird der Gasstrom von dem Einlass zu dem anderen Auslass geführt. Eine Absperrung des Einlasses ist nicht vorgesehen.

Die US 2010/0116256 A1 offenbart ein Abgasventil, bei dem ein schwenkbarer Ventilkörper die Breite eines Einlasskanals hat. Das führt jedoch zu einem sehr großen Bauraum des Ventils. Die das Abgas führenden Flächen sind parallel zur Drehachse des Ventilkörpers angeordnet.

Der Erfindung liegt das Problem zugrunde, eine Abgassteuerungseinrichtung der eingangs genannten Art so weiterzubilden, dass sie besonders einfach aufgebaut und kostengünstig zu fertigen ist.

Dieses Problem wird erfindungsgemäß dadurch gelöst, dass der Ventilkörper einen auf einem Teilbereich einer der Abgasführungsflächen angeordneten Sockel hat und dass in einer dritten Drehstellung der Sockel die Einlassöffnung verschließt und dass der Sockel ausschließlich auf einer der Abgasführungsflächen des Ventilkörpers angeordnet ist.

Durch diese Gestaltung weist die Abgassteuerungseinrichtung durch den einzigen Ventilkörper eine besonders geringe Anzahl an Bauteilen auf. Zudem lässt sich der gemeinsame Ventilkörper mit einem einzigen Aktor besonders einfach ansteuern, so dass die Abgassteuerungseinrichtung besonders einfach aufgebaut und kostengünstig zu fertigen ist. Weiterhin hat die erfindungsgemäße Abgassteuerungseinrichtung durch den einzigen Ventilkörper eine besonders geringe Anzahl an Dichtstellen. Die geringe Anzahl an Dichtstellen und die besonders einfache Steuerung der Strömung in dem Abgaskanal und dem Bypasskanal führt zudem zu einer besonders geringen Anzahl an Fehlermöglichkeiten.

Die Erzeugung des Bypassventils und des Abgasventils mit einem einzelnen Ventilkörper gestaltet sich konstruktiv besonders einfach, weil ein Gehäuse zur Aufnahme des Ventilkörpers eine Einlassöffnung des gemeinsamen Abgaseinlasskanals, eine Auslassöffnung des Abgaskanals des Abgasventils und eine Auslassöffnung des Bypasskanals des Bypassventils aufweist.

Der Ventilkörper gestaltet sich konstruktiv besonders einfach, weil der Ventilkörper drehbar in dem Gehäuse angeordnet ist und zwei zur Drehachse geneigte Abgasführungsflächen aufweist, so dass in einer ersten Drehstellung die Einlassöffnung über die eine Abgasführungsfläche mit der einen Auslassöffnung und in der zweiten Drehstellung die Einlassöffnung über die andere Abgasführungsfläche mit der anderen Auslassöffnung verbunden ist. Ein weiterer Vorteil dieser Gestaltung besteht darin, dass der Aktor als einfacher Drehsteller des Ventilkörpers ausgebildet sein kann. Die Abgassteuerungseinrichtung lässt sich hierdurch besonders kostengünstig fertigen.

Der bauliche Aufwand zum Verschluss der Einlassöffnung lässt sich besonders gering halten, weil der Ventilkörper einen auf einem Teilbereich einer der Abgasführungsflächen angeordneten Sockel hat und weil in einer dritten Drehstellung der Sockel die Einlassöffnung verschließt.

Die Störung der Abgasströmung durch eine Drosselung des Sockels lässt sich besonders gering halten, weil der Sockel ausschließlich auf einer der Abgasführungsflächen des Ventilkörpers angeordnet ist. Wenn der Bypasskanal einen geringeren Abgasstrom benötigt als der Abgaskanal, ist der Sockel damit vorzugsweise auf der zu der Auslassöffnung des Bypasskanals führenden Abgasführungsfläche angeordnet.

Eine Trennung der Strömungen lässt sich gemäß einer anderen vorteilhaften Weiterbildung der Erfindung vermeiden, wenn der gemeinsame Abgaseinlasskanal bis zu dem gemeinsamen Ventilkörper geführt ist. Hierdurch vermag der Ventilkörper die Strömung im Abgaseinlasskanal in Abhängigkeit von der Ansteuerung des Aktors unmittelbar dem jeweiligen Abgaskanal zuzuleiten.

Ein unerwünschtes Überströmen von Abgas zwischen dem Abgaskanal und dem Bypasskanal lässt sich gemäß einer anderen vorteilhaften Weiterbildung der Erfindung vermeiden, wenn der gemeinsame Ventilkörper in der den gemeinsamen Abgaseinlasskanal verschließenden Stellung die beiden Auslassöffnungen voneinander trennt.

Die Ansteuerung des Abgasventils und des Bypassventils gestaltet sich gemäß einer anderen vorteilhaften Weiterbildung der Erfindung konstruktiv besonders einfach, wenn der Aktor ein Stellmotor zur Einstellung der Drehstellung des Ventilkörpers ist.

Die erfindungsgemäße Abgassteuerungseinrichtung gestaltet sich besonders kompakt, wenn eine Drehachse des Stellmotors parallel zu der Drehachse des Ventilkörpers angeordnet ist und wenn ein Getriebe zwischen Stellmotor und Ventilkörper eben gestaltet ist. Weiterhin wird hierdurch eine thermische Belastung des Stellmotors besonders gering gehalten.

Strömungsverluste lassen sich gemäß einer anderen vorteilhaften Weiterbildung der Erfindung besonders gering halten, wenn das Gehäuse rohrförmig mit einer Mantelfläche gestaltet ist und wenn die Einlassöffnung auf einer Seite einer Mantelfläche und die Auslassöffnungen auf der der Einlassöffnung gegenüberliegenden Seite der Mantelfläche angeordnet sind.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch eine Brennkraftmaschine mit einer erfindungsgemäßen Abgassteuerungseinrichtung,
- Fig. 2: die erfindungsgemäße Abgassteuerungseinrichtung aus Figur 1,
- Fig. 3 - 5: Schnittdarstellungen durch einen Teilbereich der erfindungsgemäßen Abgassteuerungseinrichtung in verschiedenen Stellungen,
- Fig. 5: perspektivisch einen Ventilkörper der erfindungsgemäßen Abgassteuerungseinrichtung.

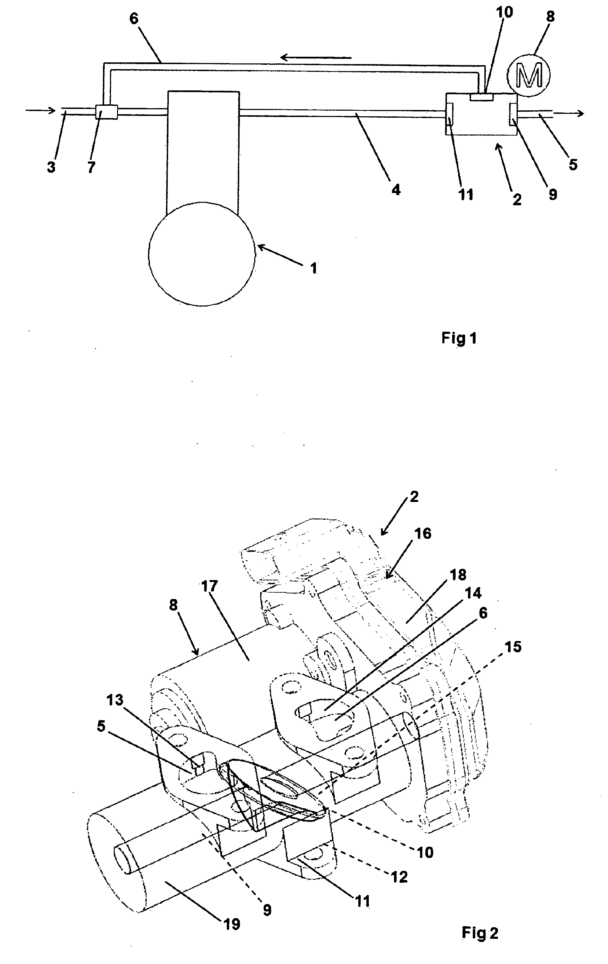

Figur 1 zeigt eine Brennkraftmaschine 1 mit einer Abgassteuerungseinrichtung 2. Die Brennkraftmaschine 1 hat einen Ansaugkanal 3, über den Frischluft aus der Umwelt angesaugt wird, und ein zu der Abgassteuerungseinrichtung 2 führendes Abgasrohr 4. Die Abgassteuerungseinrichtung 2 steuert eine Strömung in einem über nicht dargestellte Schalldämpfer, Filter oder Katalysatoren in die Umwelt führenden Abgaskanal 5 und in einem Bypasskanal 6, der zu einem in dem Ansaugkanal 3 angeordneten Mischer 7 führt. Die Abgassteuerungseinrichtung 2 lässt sich über einen Aktor 8 steuern und hat ein Abgasventil 9 zur Steuerung der Strömung in dem Abgaskanal 5 und ein Bypassventil 10 zur Steuerung der Strömung in dem Bypasskanal 6. Das Abgasrohr 4 der Brennkraftmaschine 1 führt in einen Abgaseinlasskanal 11 der Abgassteuerungseinrichtung 2.

Figur 2 zeigt die Abgassteuerungseinrichtung 2 aus Figur 1 in einer perspektivischen Darstellung. Die Abgassteuerungseinrichtung 2 hat ein rohrförmiges Gehäuse 19 mit einer Einlassöffnung 12 des Abgaseinlasskanals 11 und einer Auslassöffnung 13 des Abgaskanals 5 des Abgasventils 9 und einer Auslassöffnung 14 des Bypasskanals 6 des Bypassventils 10. Die Auslassöffnungen 13, 14 sind der Einlassöffnung 12 gegenüberliegend in einer Mantelfläche des rohrförmigen Gehäuses 19 angeordnet. Ein einziger Ventilkörper 15 ist drehbar in dem rohrförmigen Gehäuse 19 angeordnet. Der Aktor 8 ist als Stellmotor mit einer parallel zur Drehachse des Ventilkörpers 15 angeordneten Achse ausgebildet und über ein ebenes Getriebe 16 mit dem Ventilkörper 15 verbunden. Zur Vereinfachung sind von dem Getriebe 15 und dem Aktor 8 nur Gehäuseteile 17, 18 dargestellt.

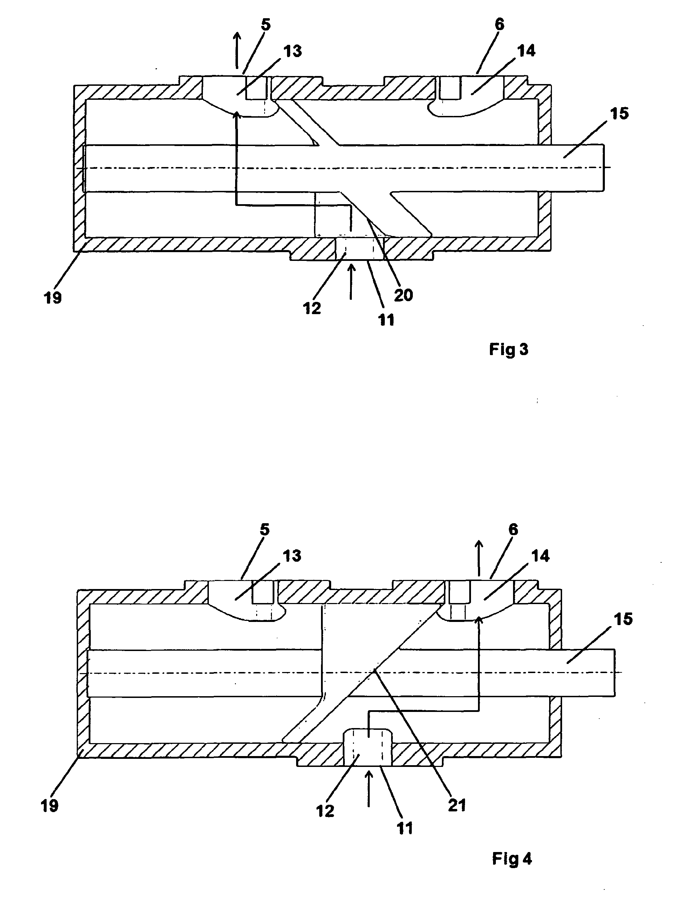

Figur 3 zeigt eine Schnittdarstellung durch das Gehäuse 19 mit dem Ventilkörper 15 in einer ersten Drehstellung, in der eine Strömung zu der Auslassöffnung 13 des Abgaskanals 5 freigegeben ist. Der Ventilkörper 15 hat hierzu eine erste Abgasführungsfläche 20 zur Führung der Strömung. Die Auslassöffnung 14 des Bypasskanals 6 ist von der Strömung getrennt.

Figur 4 zeigt eine Schnittdarstellung durch das Gehäuse 19 mit dem Ventilkörper 15 in einer zweiten Drehstellung, in der die Strömung durch die Auslassöffnung 14 des Bypasskanals 6 freigegeben ist. Hierfür hat der Ventilkörper 15 eine zweite Abgasführungsfläche 21. Die Auslassöffnung 13 des Abgaskanals 5 ist von der Strömung getrennt.

Zur Verdeutlichung sind in den Figuren 1, 3 und 4 die Strömungen mit Pfeilen gekennzeichnet.

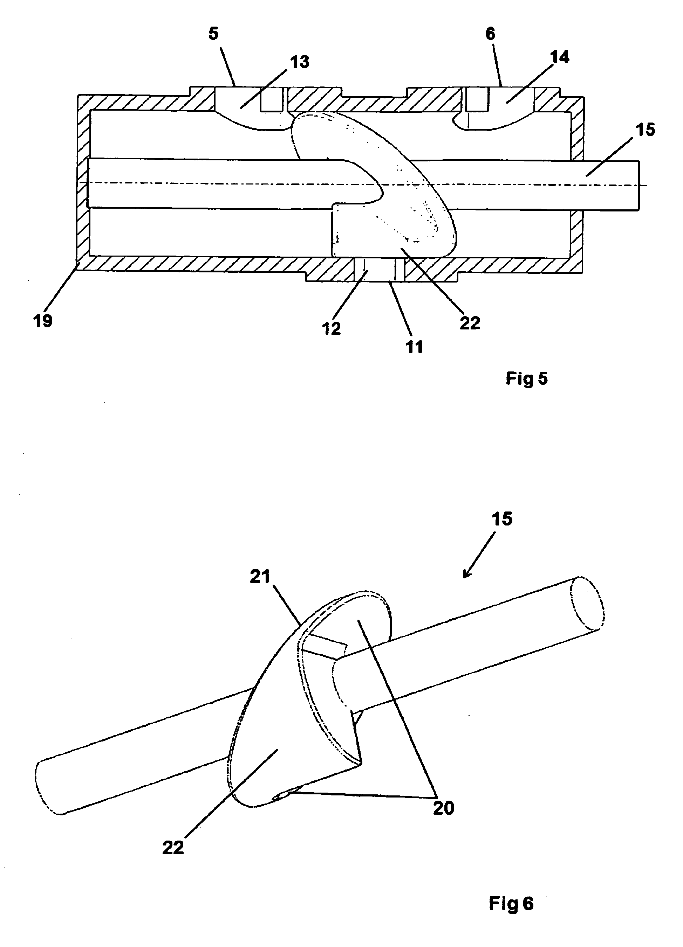

Figur 5 zeigt das Gehäuse 19 mit dem Ventilkörper 15 in einer dritten Drehstellung, in der die Einlassöffnung 12 des Abgaseinlasskanals 11 durch einen Sockel 22 des Ventilkörpers 15 verschlossen ist. Gleichzeitig sind die Auslassöffnungen 13, 14 voneinander getrennt.

Figur 6 zeigt zur Verdeutlichung den Ventilkörper 15 in einer perspektivischen Darstellung. Hierbei ist zu erkennen, dass der Sockel 22 einen Teilbereich einer der Abgasführungsflächen 20 verdeckt. Die andere der Abgasführungsflächen 21 ist frei und ermöglicht eine ungehinderte Strömung des Abgases.

## Patentansprüche

1. Abgassteuerungseinrichtung (2) für eine Brennkraftmaschine (1) mit einem Abgasventil (9) zur Steuerung einer Strömung in einem Abgaskanal (5) und mit einem Bypassventil (10) zur Steuerung einer Strömung in einem Bypasskanal (6), mit einem ansteuerbaren Aktor (8) zum Ansteuern des Abgasventils (9) und des Bypassventils (10), wobei das Abgasventil (9) und das Bypassventil (10) einen gemeinsamen Ventilkörper (15) und einen gemeinsamen Abgaseinlasskanal (11) aufweisen und ein Gehäuse (19) zur Aufnahme des Ventilkörpers (15) eine Einlassöffnung (12) des gemeinsamen Abgaseinlasskanals (11), eine Auslassöffnung (13) des Abgaskanals (5) des Abgasventils (9) und eine Auslassöffnung (14) des Bypasskanals (6) des Bypassventils (10) aufweist und wobei der Ventilkörper (15) drehbar in dem Gehäuse (19) angeordnet ist und zwei zur Drehachse geneigte Abgasführungsflächen (20, 21) aufweist, so dass in einer ersten Drehstellung die Einlassöffnung (12) über die eine Abgasführungsfläche (20) mit der einen Auslassöffnung (13) und in der zweiten Drehstellung die Einlassöffnung (12) über die andere Abgasführungsfläche (21) mit der anderen Auslassöffnung (14) verbunden ist, **dadurch gekennzeichnet,** dass der Ventilkörper (15) einen auf einem Teilbereich einer der Abgasführungsflächen (20, 21) angeordneten Sockel (22) hat und dass in einer dritten Drehstellung der Sockel (22) die Einlassöffnung (12) verschließt und dass der Sockel (22) ausschließlich auf einer der Abgasführungsflächen (20, 21) des Ventilkörpers (15) angeordnet ist.

2. Abgassteuerungseinrichtung nach Anspruch 1, **dadurch gekennzeichnet,** dass der gemeinsame Abgaseinlasskanal (11) bis zu dem gemeinsamen Ventilkörper (15) geführt ist.

3. Abgassteuerungseinrichtung nach Anspruch 1, **dadurch gekennzeichnet,** dass der gemeinsame Ventilkörper (15) in der die Einlassöffnung (12) verschließenden Stellung die beiden Auslassöffnungen (13, 14) voneinander trennt.

4. Abgassteuerungseinrichtung nach einem der Ansprüche 1 bis 3, **dadurch gekennzeichnet, dass** der Aktor (8) ein Stellmotor zur Einstellung der Drehstellung des Ventilkörpers (15) ist.

5. Abgassteuerungseinrichtung nach Anspruch 4, **dadurch gekennzeichnet,** dass eine Drehachse des Stellmotors parallel zu der Drehachse des Ventilkörpers (15) angeordnet ist und dass ein Getriebe (16) zwischen Stellmotor und Ventilkörper (15) eben gestaltet ist.

6. Abgassteuerungseinrichtung nach einem der Ansprüche 1 bis 5, **dadurch gekennzeichnet, dass** das Gehäuse (19) rohrförmig mit einer Mantelfläche gestaltet ist und dass die Einlassöffnung (12) auf einer Seite einer Mantelfläche und die Auslassöffnungen (13, 14) auf der der Einlassöffnung (12) gegenüberliegenden Seite der Mantelfläche angeordnet sind.

## Claims

1. Exhaust-gas control device (2) for an internal combustion engine (1), having an exhaust-gas valve (9) for controlling a flow in an exhaust-gas duct (5), and having a bypass valve (10) for controlling a flow in a bypass duct (6), having an activatable actuator (8) for activating the exhaust-gas valve (9) and the bypass valve (10), wherein the exhaust-gas valve (9) and the bypass valve (10) have a common valve body (15) and a common exhaust-gas inlet duct (11), and a housing (19) for accommodating the valve body (15) has an inlet opening (12) of the common exhaust-gas inlet duct (11), an outlet opening (13) of the exhaust-gas duct (5) of the exhaust-gas valve (9) and an outlet opening (14) of the bypass duct (6) of the bypass valve (10), and wherein the valve body (15) is arranged rotatably in the housing (19) and has two exhaust-gas guiding surfaces (20, 21) that are inclined relative to the axis of rotation, such that, in a first rotational position, the inlet opening (12) is connected via one exhaust-gas guiding surface (20) to one outlet opening (13) and, in the second rotational position, the inlet opening (12) is connected via the other exhaust-gas guiding surface (21) to the other outlet opening (14), **characterized in that** the valve body (15) has a raised portion (22) arranged on a sub-region of one of the exhaust-gas guiding surfaces (20, 21), and **in that**, in a third rotational position, the raised portion (22) closes the inlet opening (12), and **in that** the raised portion (22) is arranged only on one of the exhaust-gas guiding surfaces (20, 21) of the valve body (15).

2. Exhaust-gas control device as claimed in Claim 1, **characterized in that** the common exhaust-gas inlet duct (11) extends as far as the common valve body (15).

3. Exhaust-gas control device as claimed in Claim 1, **characterized in that** the common valve body (15), in the position in which it closes the inlet opening (12), separates the two outlet openings (13, 14) from one another.

4. Exhaust-gas control device as claimed in one of Claims 1 to 3, **characterized in that** the actuator (8) is a servomotor for adjusting the rotational position of the valve body (15).

5. Exhaust-gas control device as claimed in Claim 4, **characterized in that** an axis of rotation of the servomotor is arranged parallel to the axis of rotation of the valve body (15), and **in that** a gearing (16) between the servomotor and valve body (15) is of planar configuration.

6. Exhaust-gas control device as claimed in one of Claims 1 to 5, **characterized in that** the housing (19) is of tubular form with a shell surface, and **in that** the inlet opening (12) is arranged on one side of a shell surface and the outlet openings (13, 14) are arranged on that side of the shell surface which is situated opposite the inlet opening (12).

## Revendications

1. Dispositif (2) pour se rendre maître de gaz d'échappement pour un moteur (1) à combustion interne, comprenant une soupape (9) de gaz d'échappement, pour se rendre maître d'un écoulement dans un conduit (5) pour du gaz d'échappement, et comprenant une soupape (10) de dérivation, pour se rendre maître d'un écoulement dans un conduit (6) de dérivation, comprenant un actionneur (8), qui peut être commandé pour commander la soupape (9) de gaz d'échappement et la soupape (10) de dérivation, la soupape (9) de gaz d'échappement et la soupape (10) de dérivation ayant un corps (15) de soupape commun et un conduit (11) commun d'entrée de gaz d'échappement et une enveloppe (19) de réception du corps (15) de soupape ayant une ouverture (12) d'entrée du conduit (11) commun d'entrée de gaz d'échappement, une ouverture (13) de sortie du conduit (5) de gaz d'échappement de la soupape (9) de gaz d'échappement et une ouverture (14) de sortie du conduit (6) de dérivation de la soupape (10) de dérivation et le corps (15) de soupape étant monté tournant dans l'enveloppe (19) et ayant deux surfaces (20, 21) de conduite des gaz d'échappement inclinées par rapport à l'axe de rotation, de manière à ce que, dans une première position de rotation, l'ouverture (12) d'entrée communique avec l'une des ouvertures (13) de sortie par l'une des surfaces (20) de conduite des gaz d'échappement et, dans la deuxième position de rotation, l'ouverture (12) d'entrée communique avec l'autre ouverture (14) de sortie par l'autre surface (21) de conduite des gaz d'échappement, **caractérisé en ce que** le corps (15) de soupape a un socle (22) disposé sur une zone partielle de l'une des surfaces (20, 21) de conduite des gaz d'échappement et **en ce que**, dans une troisième position de rotation, le socle (22) ferme l'ouverture (12) d'entrée et **en ce que** le socle (22) est disposé exclusivement sur l'une des surfaces (20, 21) de conduite des gaz d'échappement du corps (15) de soupape.

2. Dispositif pour se rendre maître de gaz d'échappement suivant la revendication 1, **caractérisé en ce que** le conduit (11) commun d'entrée des gaz d'échappement va jusqu'au corps (15) commun de soupape.

3. Dispositif pour se rendre maître de gaz d'échappement suivant la revendication 1, **caractérisé en ce que** le corps (15) commun de soupape sépare l'une de l'autre les deux ouvertures (13, 14) de sortie dans la position fermant l'ouverture (12) d'entrée.

4. Dispositif pour se rendre maître de gaz d'échappement suivant l'une des revendications 1 à 3, **caractérisé en ce que** l'actionneur (8) est un servomoteur pour régler la position en rotation du corps (15) de soupape.

5. Dispositif pour se rendre maître de gaz d'échappement suivant la revendication 4, **caractérisé en ce qu'**un axe de rotation du servomoteur est disposé parallèlement à l'axe de rotation du corps (15) de soupape et **en ce qu'**une transmission (16) entre le servomoteur et le corps (15) de soupape est conformée de manière plane.

6. Dispositif pour se rendre maître de gaz d'échappement suivant l'une des revendications 1 à 5, **caractérisé en ce que** l'enveloppe (19) est tubulaire, en ayant une surface latérale, et **en ce que** l'ouverture (12) d'entrée est disposée d'un côté d'une surface latérale et les ouvertures (13, 14) de sortie du côté de la surface latérale opposé à l'ouverture (12) d'entrée.
